# EUROPÄISCHE PATENTSCHRIFT

(11) **EP 3 262 859 B1**
(45) Veröffentlichungstag und Bekanntmachung des Hinweises auf die Patenterteilung: **01.04.2020**
(21) Anmeldenummer: 16705759.5
(22) Anmeldetag: 17.02.2016
(51) Int. Cl.: H04B 5/00, H04W 12/06, H04W 4/80

(54) **SYSTEM ZUR VERWENDUNG MOBILER ENDGERÄTE ALS SCHLÜSSEL FÜR FAHRZEUGE**
SYSTEM FOR USING MOBILE TERMINALS AS KEYS FOR VEHICLES
SYSTÈME POUR UTILISER DES TERMINAUX MOBILES EN TANT QUE CLÉS DE VÉHICULE

(30) Priorität: 23.02.2015 DE 102015002092
(43) Veröffentlichungstag der Anmeldung: 03.01.2018
(73) Patentinhaber: Bayerische Motoren Werke Aktiengesellschaft, 80809 München (DE)
(72) Erfinder: AUER, Hans, 84061 Ergoldsbach (DE)
(86) Internationale Anmeldenummer: PCT/EP2016/053336
(87) Internationale Veröffentlichungsnummer: WO 2016/135019

(56) Entgegenhaltungen:
- DE-A1-102012 012 389
- DE-C1- 4 411 451
- US-A1- 2014 298 023

## Beschreibung

Die Erfindung betrifft ein Verfahren zur Einrichten eines mobilen Endgeräts zum Steuern von Fahrzeugfunktionen eines Fahrzeugs sowie einen Server und ein Fahrzeug.

Es ist bekannt, dass ein Fahrzeug über einen NFC-Leser im Türaußengriff mit einem NFC-Device entriegelt werden kann. Außerdem kann über einen NFC-Leser im Innenraum mit diesem NFC-Device eine Fahrfreigabe hergestellt werden. Insbesondere beschreibt die Druckschrift DE 10 2014 217 899 ein System, das eine Einrichtung eines beschränkten Zugangs zu einem Fahrzeug aufweist, mit einer ersten mobilen Einheit, einer zweiten mobilen Einheit und einer zentralen Einheit, wobei die erste mobile Einheit eingerichtet ist, Daten zur Adressierung des Zugangs und Daten zur Authentifizierung des Zugangs zu generieren, und die erste mobile Einheit und die zentrale Einheit eingerichtet sind, diese Daten in einer ersten Nachricht zu übertragen. Hierbei ist die zentrale Einheit des Weiteren dazu eingerichtet, eine zweite Nachricht zur Berechtigung des Zugangs, welche die Daten zur Authentifizierung aufweist, auf der Grundlage der Daten zur Adressierung an die zumindest eine zweite mobile Einheit bereitzustellen. Außerdem ist die zweite mobile Einheit dazu eingerichtet, die Daten zur Authentifizierung zu speichern und direkt an das Fahrzeug mittels Nahfunktechnik zu übertragen. Das Fahrzeug ist dazu eingerichtet, die von der zweiten mobilen Einheit empfangenen Daten zur Authentifizierung mit dem Fahrzeug auf andere Weise zugänglichen Daten zur Authentifizierung abzugleichen und den Zugang durch das Fahrzeug, falls die Daten zur Authentifizierung bei dem Abgleichen übereinstimmen, freizugeben.

Die Patentanmeldung DE 10 2012 012 389 A1 beschreibt eine Vorrichtung zum Steuern einer Zugangsberechtigung und/oder Fahrberechtigung für ein Fahrzeug, umfassend zumindest ein mobiles Kommunikationsgerät und eine Steuerungseinheit im Fahrzeug, welche von dem mobilen Kommunikationsgesendete Berechtigungsdaten empfängt und überprüft, wobei das mobile Kommunikationsgerät einen Datenträger zum Speichern der Berechtigungsdaten aufweist.

Es ist daher eine Aufgabe der Erfindung, einen Fahrzeugzugang zu verbessern.

Insbesondere ist eine Aufgabe der Erfindung, einen Fahrzeugzugang für mobile Endgeräte zu verbessern.

Gelöst wird diese Aufgabe durch die Merkmale der unabhängigen Ansprüche. Vorteilhafte Ausgestaltungen und Weiterbildungen der Erfindung ergeben sich aus den abhängigen Ansprüchen.

Gemäß einem Aspekt zeichnet sich die Erfindung aus durch ein Verfahren zur Einrichten eines mobilen Endgeräts zum Steuern von Fahrzeugfunktionen eines Fahrzeugs, wobei das mobile Endgerät und das Fahrzeug jeweils ein Nahfunksystem aufweisen. Das mobile Endgerät kann ein Near-Field-Communication, kurz NFC, Gerät sein. Das Nahfunksystem kann beispielsweise NFC sein. Eine Fahrzeugfunktion kann ein Öffnen einer Fahrzeugtür, ein Starten eines Motors, ein Freigeben einer Wegfahrsperre, ein Freigeben von Fahrerassistenzsystem, und/oder weitere Fahrzeugfunktionen umfassen. Das Verfahren umfasst ein Empfangen einer Anforderung, einen Fahrzeugschlüssel zur Nutzung von Fahrzeugfunktionen des Fahrzeugs für ein mobiles Endgerät auszustellen, an einem Server, ein Erzeugen des Fahrzeugschlüssels durch den Server, ein Übertragen des Fahrzeugschlüssels an ein sicheres Element des mobilen Endgeräts, und ein Speichern des Fahrzeugschlüssels in dem sicheren Element des mobilen Endgeräts.

Der Server kann einen oder mehrere Services ausführen. Beispielsweise kann der Server einen Backend-Service zur Kommunikation mit dem NFC-Gerät, einen Trusted-Service-Manager zur Kommunikation mit dem sicheren Element des NFC-Geräts und/oder dem NFC-Gerät und weitere Services ausführen. Beispielsweise kann der Trusted-Service-Manager zwischen dem Backend bzw. einem Service des Backend und einem Gerätehersteller bzw. einem Service des Geräteherstellers logisch angeordnet sein. Der Trusted-Service-Manager kann von einem Gerätehersteller, einem Fahrzeughersteller, und/oder einem vertrauenswürdigen Dritten betrieben werden. Der Fahrzeugschlüssel, im Folgenden auch kurz Schlüssel genannt, kann ein Master-Schlüssel oder ein Slave-Schlüssel sein. Der Master-Schlüssel kann beispielsweise der Schlüssel des Fahrzeugeigentümers, eines Fahrzeughalters, und/oder eines berechtigten Nutzer, z.B. eines berechtigten Hauptnutzers, sein. Mittels des Master-Schlüssels kann der Fahrzeugeigentümer beispielsweise einen Slave-Schlüssel erzeugen lassen, um Fahrzeugfunktionen mit Nutzern zu teilen.

Durch Übertragen und Speichern des Fahrzeugschlüssels in dem sicheren Element des mobilen Endgeräts kann der Fahrzeugzugang für mobile Endgeräte effizient verbessert werden. Ein Hardware-Schlüssel ist nicht mehr für den Fahrzeugzugang erforderlich. Somit kann der Fahrzeugzugang vereinfacht werden.

Gemäß einer vorteilhaften Ausgestaltung kann das sichere Element und das Nahfunksystem des mobilen Endgerätes zur direkten Kommunikation verbunden sein, insbesondere derart zur direkten Kommunikation verbunden sind, dass Software, die ohne physische Verbindung zum Endgerät veränderlich ist, die Kommunikation nicht beeinflussen kann. Hiermit kann die Sicherheit bei der Kommunikation innerhalb des mobilen Endgeräts erhöht werden.

Gemäß einer weiteren vorteilhaften Ausgestaltung kann der Fahrzeugschlüssel kryptographisch bearbeitete Daten repräsentieren. Hiermit kann verhindert werden, dass der Fahrzeugschlüssel für ein bestimmtes Fahrzeug durch unbefugte Dritte nachgemacht werden kann.

Gemäß einer weiteren vorteilhaften Ausgestaltung kann das Verfahren ferner ein Senden des Fahrzeugschlüssels durch das mobile Endgerät an das Fahrzeug unter Nutzung der direkten Kommunikation innerhalb des mobilen Endgeräts, ein Verifizieren des Fahrzeugschlüssels durch das Fahrzeug, und, falls der Fahrzeugschlüssel erfolgreich durch das Fahrzeug verifiziert wurde, ein Ausführen einer Fahrzeugfunktion, insbesondere die Fahrzeugfunktion eines Aktivierens einer Fahrzeugschließanlage, umfassen. Hiermit kann ein Fahrzeugzugang durch ein mobiles Endgerät schnell und einfach ermöglicht werden.

Gemäß einer weiteren vorteilhaften Ausgestaltung kann das mobile Endgerät dazu eingerichtet sein, seine Identität kryptographisch sicher nachzuweisen. Das mobile Endgerät kann ferner die kryptographisch gesicherte Identität an das Fahrzeug senden. Durch das Verwenden einer gesicherten kryptographischen Identität kann das mobile Endgerät fälschungssicher identifiziert werden. Die Sicherheit des Fahrzeugzugangs wird somit weiter erhöht.

Gemäß einer weiteren vorteilhaften Ausgestaltung kann das Verfahren ein Empfangen einer Anforderung zum Löschen des Fahrzeugschlüssels des mobilen Endgeräts am Server, und/oder ein Senden eines Befehls zum Löschen des Fahrzeugschlüssels an das Fahrzeug und/oder ein Senden eines Befehls zum Löschen des Fahrzeugschlüssels an das mobile Endgerät umfassen. Hiermit kann die Sicherheit des Fahrzeugzugangs effizient verbessert werden. Der Fahrzeugschlüssel kann sowohl auf dem mobilen Endgerät als auch auf dem Fahrzeug zentral gesteuert, z.B. durch einen Backend-Service oder einen Trusted Service Manager, gelöscht werden. Der Fahrzeugzugang kann somit effizient geschützt werden.

Gemäß einem weiteren Aspekt zeichnet sich die Erfindung aus durch einen Server, der eingerichtet ist zum Empfangen einer Anforderung an dem Server, einen Fahrzeugschlüssel zur Nutzung von Fahrzeugfunktionen des Fahrzeugs für ein mobiles Endgerät auszustellen, zum Erzeugen des Fahrzeugschlüssels durch den Server, zum Übertragen des Fahrzeugschlüssels an ein sicheres Element des mobilen Endgeräts, und zum Speichern des Fahrzeugschlüssels in dem sicheren Element des mobilen Endgeräts. Der Server kann weiterhin dazu eingerichtet sein, das oben beschriebene Verfahren auszuführen.

Gemäß einem weiteren Aspekt zeichnet sich die Erfindung aus durch ein Fahrzeug, das eingerichtet ist zum Senden einer Authentifizierungsanforderung an ein mobiles Endgerät, zum Empfangen einer Antwort auf die gesendete Authentifizierungsanforderung, wobei die Antwort auf die gesendete Authentifizierungsanforderung durch einen auf einem sicheren Element des mobilen Endgeräts gespeicherten Fahrzeugschlüssel erzeugt wurde, zum Verifizieren der Antwort auf die gesendete Authentifizierungsanforderung, und, falls das Fahrzeug die Antwort erfolgreich verifiziert, zum Ausführen einer Fahrzeugfunktion.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren allein gezeigten Merkmale und Merkmalskombinationen sind nicht nur in der jeweils angegebenen Kombination, sondern auch in anderen Kombinationen oder aber in Alleinstellung verwendbar.

Die Erfindung beruht auf den nachfolgend dargelegten Überlegungen:
Im Folgenden werden ein System und/oder ein Verfahren für die Ausstellung, Verwaltung und Nutzung von Fahrberechtigungen auf NFC-Devices beschrieben, welches auch Automotive-spezifische Aspekte berücksichtigt. Die Beschreibung der Erfindung bezieht sich im Folgenden insbesondere auf die derzeit am Markt verbreitete Nahfunktechnik Near-Field-Communication, kurz NFC, ist aber auch auf andere Technologien, wie z.B. Bluetooth Low Energy, übertragbar. Ein Benutzer ist typischerweise im Backend/Server registriert.

Beispielsweise kann das System ein Verfahren zum Einrichten eines mobilen Endgerätes, z.B. ein NFC-Gerät, eines oder mehrere Server, die das Backend bilden und auf denen ein oder mehrere (Backend-)Services ausgeführt werden, und eines Fahrzeugs zur Steuerung von Fahrzeugfunktionen ausführen, wobei das mobile Endgerät und das Fahrzeug jeweils ein Nahfunksystem, z.B. NFC, aufweisen. Das Verfahren kann eine Anforderung, eine Authentisierung, z.B. ein Schlüssel bzw. ein Fahrzeugschlüssel, zur Nutzung von Fahrzeugfunktionen des Fahrzeugs für ein mobiles Endgerät auszustellen, an den Server senden und die Authentisierung durch den Server erzeugen und an das mobile Endgerät senden. Die Authentisierung kann optional am Fahrzeug empfangen und gespeichert werden. Die Authentisierung kann am mobilen Endgerät empfangen werden und in einem sicheren Element des mobilen Endgeräts gespeichert werden. Das sichere Element und das Nahfunksystem des Endgerätes können zur direkten Kommunikation verbunden sein, insbesondere derart zur direkten Kommunikation verbunden sein, dass Software, die ohne physische Verbindung zum Endgerät veränderlich ist, die Kommunikation nicht beeinflussen kann. Die Authentisierung kann kryptographisch bearbeitete Daten repräsentieren.

Die Authentisierung kann durch das mobile Endgerät an das Fahrzeug unter Nutzung der direkten Kommunikation innerhalb des mobilen Endgeräts gesendet werden und die Authentisierung durch das Fahrzeug geprüft werden. Im Fall einer erfolgreichen Authentisierung kann eine Fahrzeugfunktion, insbesondere die Aktivierung einer Fahrzeugschließanlage, ausgeführt werden. Das mobile Endgerät kann dazu eingerichtet sein, seine Identität kryptographisch sicher nachzuweisen. Die kryptographisch gesicherte Identität kann an das Fahrzeug durch das mobile Endgerät gesendet werden, wobei die Authentifizierung beispielsweise ein öffentliches kryptographisches Zertifikat, eine Chipkarte, z.B. eine Smartcard oder eine RFID-Karte, eine Transaktionsnummer, und/oder ein Schlüsselcode ist.

Eine Anforderung, dass die Authentifizierung des das mobile Endgeräts keine Gültigkeit mehr haben soll kann am Server empfangen werden. Weiter kann ein Hinweises an das Fahrzeug gesendet werden, dass die Authentifizierung des mobilen Endgerätes nicht mehr gültig ist und ein Hinweis an das mobile Endgerät gesendet werden, dass die Authentifizierung des mobilen Endgerätes nicht mehr gültig ist.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung. Im Einzelnen zeigen schematisch
**Fig. 1** ein beispielhaftes System für das Ausstellen, Verwalten und Nutzen von Fahrberechtigungen auf NFC-Geräten,
**Fig. 2** ein beispielhaftes Verfahren zum Einrichten eines Master-Schlüssels auf einem NFC-Gerät,
**Fig. 3** ein beispielhaftes Verfahren zum Aktivieren eines Master-Schlüssels in einem Fahrzeug,
**Fig. 4** ein beispielhaftes Verfahren zum Einrichten eines Slave-Schlüssels auf einem NFC-Gerät,
**Fig. 5** ein beispielhaftes Verfahren zum Verwenden von Fahrzeugfunktionen mithilfe eines Master-Schlüssels oder eines Slave-Schlüssels, und
**Fig. 6** ein beispielhaftes Verfahren zum Zurücknehmen eines Schlüssels auf einem NFC-Gerät.

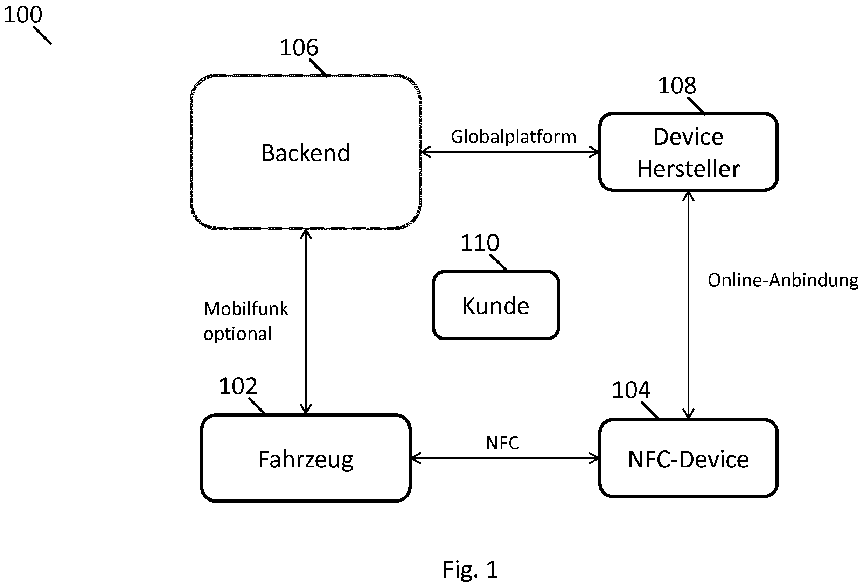

Im Detail kann, wie in **Fig. 1** gezeigt, das System 100 folgende Komponenten umfassen:
- ein Fahrzeug 102, ausgerüstet mit einer für die Erfindung geeigneten Wegfahrsperre und Türverriegelung, NFC-Lesegeräten und einer Logikeinheit. Eine Online-Anbindung des Fahrzeugs ist optional. Ebenfalls optional ist eine Menschmaschineschnittstelle zum Verwalten von Berechtigungen auf dem Fahrzeug.
- ein NFC-Device bzw. ein NFC-Gerät 104 oder allgemein ein Gegenstand, den ein Kunde bzw. ein Nutzer des Fahrzeugs mit sich führt und ausgerüstet mit einer Nahfunktechnik, z.B. NFC, einem internen gesicherten Speicher und einer Logik, um Kommunikation mit einer Gegenstelle, z.B. einem NFC-Leser bzw. einem NFC-Lesegerät, herzustellen. Spezielle Ausprägungen können sein: eine NFC-Smartcard, ein Smartphone mit NFC-Schnittstelle und ein Secure Element bzw. ein sicheres Element (ein Smartphone wird hierin als Kombination von Device-Hersteller und NFC-Device gesehen), NFC-Aufkleber mit passender Funktionalität, Fahrzeugschlüssel, im Folgenden auch ID-Geber genannt, mit NFC-Funktionalitäten. Es können weitere Bauformen und Kombinationen möglich sein.
- ein Backendsystem 106 zur Verwaltung von Nutzern, Fahrzeugen, Geräten und/oder Berechtigungen. Insbesondere existieren ein Nutzer-Frontend, Verbindungen zu Auslieferungssystemen für Fahrberechtigungen (z.B. Globalplatform-Services), und/oder ein Zugriff auf relevante Datenbanken.
- ein Device bzw. Geräte-Hersteller 108: Der Geräte-Hersteller 108 kann ein Smartphone herstellen, das das NFC-Device 104 umfasst. Oder, der Geräte-Hersteller kann einen Computer herstellen oder betreiben, der einem Verbindung zu einem NFC-Device herstellt, beispielsweise per USB Kabel.

### Eigentumsnachweis

Eine Kunde 110, im Folgenden auch Nutzer genannt, kann durch einen Eigentumsnachweis über das Fahrzeug 102 (z.B. einen Fahrzeugbrief beim Händler vorlegen, eine Online-Überprüfung durch idnow.de durchführen, ...) seinen BMW Account freischalten lassen, um selbst über ein Internet-Portal Fahrberechtigungen für NFC-Devices auszustellen und zu verwalten.

Der Kunde 110 hat außerdem die Möglichkeit die "NFC-Zugangs Funktion" im Fzg beim Gebrauchtwagenkauf und/oder Gebrauchtwagenverkauf zu deaktivieren, um einen Missbrauch zu vermeiden. Dann muss der Eigentumsnachweis erneut erbracht werden, um die Funktion wieder zu aktivieren.

### Ausstellen einer Fahrberechtigung

"Fahrberechtigungen" sind im Sinne dieser Erfindung kryptographisch abgesicherte Daten (z.B. Zertifikate), die u.a. Informationen über das verwendete Device bzw. Gerät, im speziellen dessen eindeutigen Bezeichner, auch Identifikator oder kurz ID genannt, die Fahrzeugidentifikationsnummer, auch Vehicle Identification Number oder, kurz, VIN genannt, Details zum Umfang der erteilten Berechtigung und schließlich weitere Datenfelder zur besonderen Verwendung (vlg. dazu auch DE 10 2014 217 899) umfassen.

Fordert der Kunde 110 eine neue Fahrberechtigung für ein Fahrzeug 102 für ein spezielles NFC-Device 104 an, wird die Fahrberechtigung im Backend 106 erzeugt und an das NFC-Device 104 übertragen, um es in dessen Secure Element, kurz SE, abzulegen. Im SE wird außerdem die Software mit den Authentisierungsroutinen für die Kommunikation mit dem Fahrzeug 102 abgelegt.

Bei NFC-Devices 104, deren SE über den Global Plattform, kurz GP, Standard ansprechbar sind, wird die Fahrberechtigung vom BMW Backend 106 unter Verwendung von GP an das NFC-Device 104 übertragen. Bei NFC-Devices 104, deren SE nicht über GP ansprechbar sind, kommt ein durch den Hersteller 108 des NFC-Devices 104 vorgegebener proprietärer Prozess zur Übertragung der Fahrberechtigung zum Einsatz. Bei NFC-Devices 104 mit Online-Anbindung geschieht die Übertragung der Fahrberechtigung über diese Online-Anbindung (Mobilfunk, WLAN, ...). Bei NFC-Devices 104 ohne Online-Anbindung kommt ein NFC-Lesegerät zum Einsatz, z.B.am heimischen PC oder über das NFC-fähige Mobiltelefon des Kunden.

In einer vorteilhaften Ausprägung bietet das Device bereits die Möglichkeit, seine eigene Identität, z.B. eine Device-ID bzw. eine Geräte-ID, kryptographisch sicher gegenüber einer Gegenstelle nachzuweisen. Davon entkoppelt kann ein öffentlicher (nicht geheim zuhaltender) kryptographisch gesicherter Datensatz, z.B. ein Zertifikat, bestätigen, dass die Device-ID im Backend-System bereits bekannt und vertrauenswürdig ist. Dieses Bekanntmachen kann über den Global-Plattform-Standard erfolgen. Die oben genannte Fahr/Zugangsberechtigung wiederum kann in dieser Ausgestaltung dann ebenfalls als nicht geheim zuhaltendes Zertifikat umgesetzt werden, sodass der Transport der Fahrberechtigung auch auf potentiell unsicheren Kanälen erfolgen kann, ohne dass Nachteile für die Sicherheit des Gesamtsystems zu befürchten sind.

### Nutzung

Ein solches NFC-Device kann ohne Verzögerung direkt am Fahrzeug zum Entriegeln und Herstellen der Fahrberechtigung genutzt werden. Dabei kommuniziert innerhalb des Devices die NFC-Komponente über eine direkte Verbindung mit dem SE und ist so vor Software-Manipulationen, z.B. durch eine manipulierte App, geschützt. Das System ist so gestaltet, dass im Moment der Benutzung des Devices bzw. des Geräts am Fahrzeug im alltäglichen Betrieb keine Backend-Verbindung erforderlich ist. Dies ermöglicht z.B. Fahrzeugzugang und Motorstart auch in Tiefgaragen ohne Mobilfunkausleuchtung.

### Verwaltung

Der Kunde hat die Möglichkeit im Internet-Portal die aktiven Fahrberechtigungen für seine Fahrzeuge einzusehen und einzelne Berechtigungen zu löschen. Wird eine Berechtigung gelöscht, wird sie sowohl im Fahrzeug als auch im NFC-Device deaktiviert, sofern diese über eine Online-Verbindung erreichbar sind. Das Backend, kurz BE, protokolliert laufend, welche Fahrberechtigungen zu welcher Zeit aktiv waren, was eine Anforderung von Versicherungen ist. Der Kunde hat außerdem die Möglichkeit im Fahrzeug über ein Human-Machine-Interface, kurz HMI, die aktiven NFC-Devices einzusehen und dort zu deaktivieren, was auch an das BE zurückgemeldet wird.

### Vorteile der Erfindung

Die Ausführung als backendgestütztes Gesamtsystem birgt mehrere Vorteile:
- Es ist im BE jederzeit eine Übersicht verfügbar, welche Berechtigungen für welche Devices und Fahrzeuge ausgestellt sind. Nahezu jederzeit kann auch der Widerrufsstatus der Berechtigungen verfolgt werden.
- Ein ggf. webbasiertes Nutzerinterface am BE ermöglicht eine kundenfreundliche und intuitive Verwaltung von Devices und Berechtigungen.
- Backendunterstützung zusammen mit einem GP-fähigen Device bietet die Möglichkeit, Fahrberechtigungen online auf das Device zu spielen.
- Das gezeigte System ermöglicht eine sehr flexible Zuordnung mehrerer Fahrzeuge zu mehreren Devices über Berechtigungen im Sinne einer (m:n)-Beziehung. (MultiKey-/MultiCar-Eigenschaft)
- Das Löschen von Berechtigungen ist sowohl im Fahrzeug als auch online möglich.
- Nach einer erfolgreichen Aktivierung einer Berechtigung muss für alltägliche Use Cases keine online-Verbindung von Fahrzeug und/oder Device bestehen.
- Viele Devices, darunter auch NFC-fähige Mobiltelefone benötigen für die alltäglichen Use Cases (öffnen/starten) keine eigene Energieversorgung oder nur noch marginale Rest-Akkufüllstände.

Software wird hierin als Verarbeitungsbefehle an elektronische Recheneinheiten verstanden. Daten sind nicht Software und umgekehrt. Das sichere Element bzw. das Secure Element kann auch Verfahrensanweisungen speichern, auf welche Art die Authentifizierung mit dem Fahrzeug und/oder dem Server ausgetauscht wird. Die Authentisierung sind typischerweise kryptographisch gesicherte Daten, insbesondere Zertifikate.

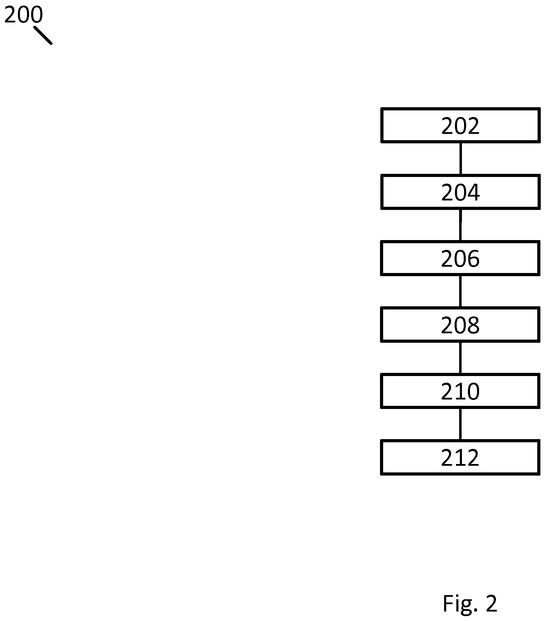

Im Detail zeigt **Fig. 2** ein beispielhaftes Verfahren 200 zum Einrichten eines Master-Schlüssels, auf einem NFC-Device bzw. NFC-Gerät 104. Der Master-Schlüssel kann ein dem Eigentümer des Fahrzeugs zugeordneter Schlüssel sein. Der Master-Schlüssel kann eine Fahrberechtigung umfassen, die es ermöglicht alle Fahrberechtigungen des Fahrzeugs zu steuern. Beispielsweise können die Fahrberechtigungen ein Öffnen der Türen des Fahrzeugs und/oder ein Starten des Fahrzeugs umfassen. Um den Master-Schlüssel auf dem NFC-Gerät, z.B. einem Smartphone oder einem mobilen Gerät mit der Möglichkeit über NFC zu kommunizieren, einrichten bzw. installieren zu können, kann ein Fahrzeugeigentümer sich bei einem Backend, insbesondere bei einem Backend-Service, z.B. einem Backend-Services des Herstellers seines Fahrzeugs, registrieren. Nach einem erfolgreichen Registrieren des Fahrzeugs kann der Fahrzeugeigentümer Zugangsdaten zu dem Backend-Service erhalten. Die Zugangsdaten kann der Fahrzeugeigentümer, z.B. der Kunde 110, in eine App auf dem NFC-Gerät, z.B. eine App eines NFC-fähigen Smartphones, eingeben und an den Backend-Service übermitteln, um sich bei dem Backend-Service anzumelden 202. Das Anmelden bei dem Backend-Service kann über eine verschlüsselte Verbindung eines drahtlosen und/oder drahtgebundenen Kommunikationskanals des NFC-Geräts erfolgen. Der Backend-Service kann die Zugangsdaten des Fahrzeugeigentümers empfangen und prüfen.

Ist die Prüfung der Zugangsdaten erfolgreich, kann der Backend-Service 108 eine Nachricht zur Bestätigung eines erfolgreichen Anmeldens des Fahrzeugeigentümers mit seinen Zugangsdaten an das NFC-Gerät 104 übermitteln. Die Nachricht kann eine Fahrgestellnummer, auch Vehicle Identification Number VIN genannt, eines Fahrzeugs 102 des Fahrzeugeigentümers umfassen. Über die App des NFC-Geräts 104 kann der Fahrzeugeigentümer bzw. der Kunde 110 ein Hinzufügen bzw. Installieren eines Schlüssels, insbesondere eines Master-Schlüssels, auf dem NFC-Gerät 104 des Fahrzeugeigentümers starten 204. Das Hinzufügen des Schlüssels kann für ein bestimmtes Fahrzeug 104 erfolgen, das durch die Fahrgestellnummer des Fahrzeugs 104 eindeutig bestimmt werden kann. Das Hinzufügen des Schlüssels kann eine Identifikation des Fahrzeugeigentümers 110 umfassen. Beispielsweise kann die App den Fahrzeugeigentümer 110 eine Frage stellen, deren Antwort nur der Fahrzeugeigentümer kennt. In anderen Worten kann das Starten des Hinzufügens des Schlüssels zu dem NFC-Gerät mit einem Challenge-Response Verfahren zusätzlich gesichert werden.

Die App des NFC-Geräts 104 kann einen Identifikator eines sicheren Elements, engl. Secure Element, des NFC-Geräts auslesen. Dazu kann die App eine Anfrage-Nachricht an das sichere Element übermitteln und als Antwort-Nachricht den Identifikator des sicheren Elements empfangen. Den Identifikator des sicheren Elements und/oder die Fahrgestellnummer des Fahrzeugs 102 kann die App an den Backend-Service 108 übermitteln, um das Hinzufügen des Schlüssels zu dem NFC-Gerät 108 im Backend auszuführen 206. Der Backend-Service kann die Nachricht der App empfangen. Nach Empfang der Nachricht kann der Backend-Service 106 den Schlüssel, insbesondere den Master-Schlüssel, zum Entsperren des Fahrzeugs 102 bzw. zum Freigeben des Fahrzeugs aus einer Schlüsseldatenbank ermitteln 208. Des Weiteren kann der Backend-Service 106 eine Nachricht zur Installation einer Sicherheitsdomäne auf dem sicheren Element des mobilen Endgeräts an einen Service des Herstellers des NFC-Geräts 108 übermitteln. Der Service des NFC-GeräteHerstellers kann die Sicherheitsdomäne auf dem sicheren Element des NFC-Geräts 104 installieren 210 und den Schlüssel für die Sicherheitsdomäne an den Backend-Service 106 übertragen. Der Backend-Service 106 kann ferner eine Schlüsselanwendung, z.B. eine Anwendung zum Authentifizieren des Schlüssels, an das Fahrzeug und/oder die Sicherheitsdomäne anpassen.

Für die Installation der Schlüsselanwendung kann der Backend-Service 106 einen sicheren Kanal zu dem sicheren Element des NFC-Geräts aufbauen. Für den Aufbau des sicheren Kommunikationskanals kann der Backend-Service 106 den Schlüssel der Sicherheitsdomäne verwenden. Über den sicheren Kommunikationskanal kann die Schlüsselanwendung auf das sichere Element des NFC-Geräts 104 übertragen und im sicheren Element des NFC-Geräts 104 gespeichert werden. Weiterhin kann über den sicheren Kommunikationskanal der Schlüssel zum Entsperren des Fahrzeugs von dem Backend-Service 106 an das sichere Element des NFC-Geräts 104 übertragen und in dem sicheren Element des NFC-Geräts 104 gespeichert werden 212. Nach dem Übertragen und Speichern des Schlüssels auf dem sicheren Element des NFC-Geräts 104 kann der Backend-Service 106 an die App des NFC-Geräts eine Nachricht übertragen, die eine erfolgreiche Installation des Schlüssels auf dem NFC-Gerät 104 anzeigt. Durch die Verwendung des Backend-Service 106 kann eine sichere Übertragung des Schlüssels auf das sichere Element des NFC-Geräts 104 bereitgestellt werden. Der Fahrzeugeigentümer 110 kann das NFC-Gerät 104 beispielsweise für einen Zugang zu seinem Fahrzeug nutzen. Ferner kann der Fahrzeugeigentümer 110 das NFC-Gerät 104 verwenden, um Slave-Schlüssel auf Grundlage des übertragenen und gespeicherten Master-Schlüssels zu erstellen. Mittels eines Slave-Schlüssels kann der Fahrzeugeigentümer effizient und selektiv Fahrberechtigungen für das Fahrzeug 102 erstellen, verteilen und/oder entziehen.

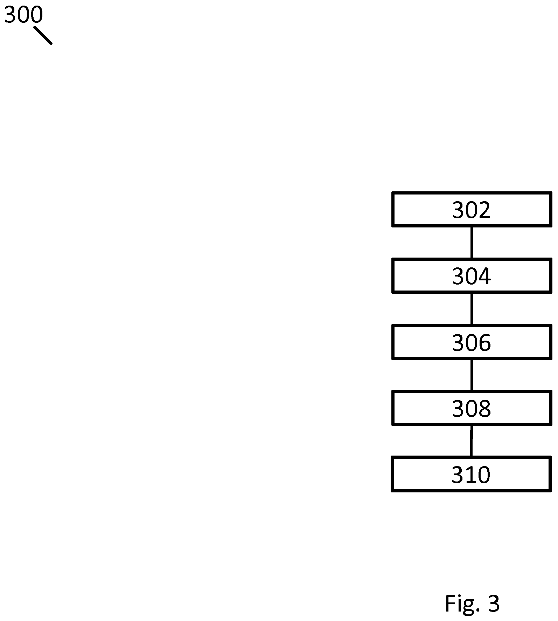

**Fig. 3** zeigt ein Aktivieren 300 eines in einem NFC-Gerät 104 gespeicherten Schlüssels, insbesondere eines Master-Schlüssels, in einem Fahrzeug 102. Der Kunde 110 kann das Aktivieren 300 des Schlüssels, insbesondere des Master-Schlüssels in einem Fahrzeug 102 starten 302. Das Aktivieren des Schlüssels kann beispielsweise über eine Eingabeschnittstelle des Fahrzeugs 102 in einer Haupteinheit, engl. Head Unit, oder über ein Steuergerät des Fahrzeugs durch den Kunden 110 gestartet werden. Die Haupteinheit oder das Steuergerät des Fahrzeugs 102 kann beispielsweise eine Bedienaufforderung an den Kunden 110 ausgeben, die den Kunden auffordert das NFC-Gerät 104 auf ein NFC-Lesegerät oder in die Nähe eines NFC-Lesegeräts des Fahrzeugs 102 zu positionieren, so dass das NFC-Lesegerät das NFC-Gerät 104 erkennen 304 und/oder lesen kann.

Hat das NFC-Lesegerät das NFC-Gerät 104 erkannt, kann das NFC-Lesegerät des Fahrzeugs 102 eine Nachricht an das Steuergerät zum Steuern des Fahrzeugzugangs und/oder der Fahrberechtigungen, im Folgenden auch Body Domain Controller oder kurz BDC genannt, übermitteln. Der BDC kann eine vorzugsweise sichere Kommunikationsverbindung über das NFC-Lesegerät des Fahrzeugs 102 mit dem sicheren Element des NFC-Geräts 104 aufbauen und Daten zum Aktivieren des in dem sicheren Element gespeicherten Schlüssels aus dem sicheren Element des NFC-Geräts auslesen 306. Dazu kann der BDC einen Identifikator der in dem sicheren Element gespeicherten Schlüsselanwendung abfragen und einen Befehl an die Schlüsselanwendung übermitteln, um die Daten zum Aktivieren des Schlüssels zu erhalten. Diese Daten, d.h. die Daten zum Aktiveren des Schlüssels kann der BDC verifizieren. Für das Verifizieren und Authentifizieren der Daten können bekannte kryptographische Verfahren verwendet werden. Zusätzlich kann ein ID-Geber, z.B. ein Fahrzeugschlüssel, für das Aktivieren des Schlüssels, insbesondere des Master-Schlüssels, erforderlich sein, der durch den BDC authentifiziert wird 308. Das Authentifizieren des ID-Gebers durch den BDC kann die Sicherheit beim Aktivieren des Schlüssels, insbesondere des Master-Schlüssels, effizient erhöhen.

Für das Verifizieren und/oder Authentifizieren der Daten durch den ID-Geber können die Daten an den ID-Geber übertragen werden und auf dem ID-Geber verifiziert und/oder authentifiziert werden. Ist das Verifizieren und/oder Authentifizieren der Daten zum Aktivieren des Schlüssels erfolgreich, kann der BDC den Schlüssel, insbesondere den Master-Schlüssel, aktivieren 310. Der Kunde 110 des Fahrzeugs 102 kann über ein erfolgreiches Aktivieren des Schlüssels benachrichtigt werden. Beispielsweise kann eine Nachricht über das erfolgreiche Aktivieren des Schlüssels auf einer Anzeigeeinheit der Haupteinheit und/oder des NFC-Geräts 104 angezeigt werden. Durch das erfolgreiche Aktivieren des Schlüssel, insbesondere des Master-Schlüssels, können die Fahrberechtigungen, die mit dem Master-Schlüssel verknüpft sind in dem Fahrzeug 102 genutzt werden. Durch das Benutzen des ID-Gebers zum Aktivieren des Master-Schlüssels kann die Sicherheit effizient erhöht werden. Der Kunde muss für das Aktivieren sowohl einen Master-Schlüssel in dem sicheren Element des NFC-Geräts 104 wie auch einen ID-Geber, z.B. einen Fahrzeugschlüssel vorweisen, um den Master-Schlüssel aktivieren zu können.

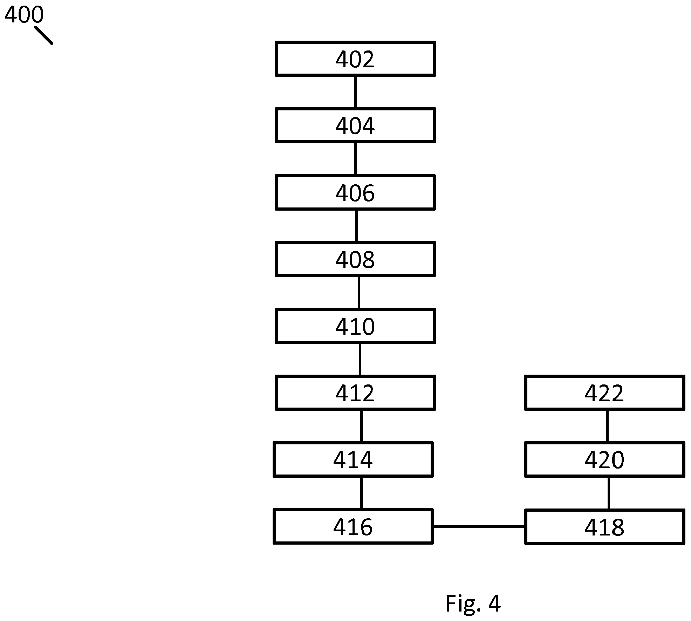

**Fig. 4** zeigt ein beispielhaftes Verfahren 400 zum Einrichten eines Slave-Schlüssels auf einem NFC-Gerät 104. Ein Slave-Schlüssel ist ein von einem Master-Schlüssel abgeleiteter Schlüssel, der beispielsweise von dem Kunden 110 oder Eigentümer des Fahrzeugs 102 an einen Nutzer des Fahrzeugs 102 verteilt werden kann. Der Kunde 110 des Fahrzeugs 102 kann somit dynamisch und flexibel Fahrberechtigungen für das Fahrzeug 102 mittels Salve-Schlüssel erteilen. Zum Einrichten eines Slave-Schlüssels auf einem NFC-Gerät kann ein Kunde 110 mit einem NFC-Gerät, auf dem ein Master-Schlüssel gespeichert ist, festlegen, auf welches NFC-Gerät ein Slave-Schlüssel übertragen werden soll.

Der Kunde 110 kann sich zunächst mit einer App des NFC-Geräts 104 gegenüber dem Backend bzw. dem Backend-Service authentisieren 402. Beispielsweise kann die App des NFC-Geräts eine Eingabeaufforderung zur Eingabe von Anmeldedaten bzw. Authentifizierungsdaten, z.B. eines Benutzernamens und/oder eines Passworts oder andere Authentifizierungsdaten, des Kunden 110 anfragen. Die Anmeldedaten können von der App des NFC-Geräts 104 an den Backend-Service 106 übermittelt werden. Der Backend-Service 106 kann die Anmeldedaten empfangen und überprüfen. Bei einer erfolgreichen Überprüfung kann der Backend-Service 106 eine Bestätigungsnachricht an die App des NFC-Geräts übermitteln. Die Bestätigungsnachricht kann eine oder mehrere Fahrgestellnummern von Fahrzeugen 102 des Kunden 110 umfassen, die mit den Authentifizierungsdaten des Kunden 110 im Backend-Service verknüpft sind. Falls der authentifizierte Kunde der Fahrzeugeigentümer ist, kann die App des NFC-Geräts eine Funktion anbieten, mit der der Kunde für eine bestimmte Fahrgestellnummer den Schlüssel des Fahrzeug teilen und/oder weitergeben kann. Der Schlüssel, der geteilt und/oder weitergegeben wird, kann als Slave-Schlüssel bezeichnet werden. Das NFC-Gerät, auf dem der Master-Schlüssel gespeichert ist, wird im Folgenden auch Master-NFC-Gerät genannt. Das NFC-Gerät, auf dem der Slave-Schlüssel gespeichert wird, wird im Folgenden auch Slave-NFC-Gerät genannt.

Möchte der Kunde 110 das Fahrzeug 102 teilen, kann er mittels der App des Master-NFC-Geräts das Fahrzeug 102 bzw. die empfangene Fahrgestellnummer des Fahrzeugs 102 auswählen. Weiterhin kann der Kunde Daten eingeben, mit denen das Slave-NFC-Gerät eindeutig identifiziert werden kann. Eine eindeutige Identifikation des Slave-NFC-Geräts kann beispielsweise durch eine Telefonnummer, eine Gerätenummer und/oder eine anderen eindeutigen Identifikator des Slave-NFC-Geräts erfolgen. Ferner kann die App einen Identifikator des sicheren Elements des Master-NFC-Geräts auslesen. Um ein Einrichten des Slave-Schlüssels auf einem Slave-NFC-Geräte anzustoßen, kann die App des Master-NFC-Geräts eine Nachricht zur Installation eines Slave-Schlüssels an das Backend übermitteln. Die Nachricht kann beispielsweise nach einer Benutzerinteraktion durch den Kunden mit der App des Master-NFC-Geräts erzeugt und ab den Backend-Service übertragen werden. Vorzugsweise umfasst die Nachricht die Fahrgestellnummer des Fahrzeugs für das der Slave-Schlüssel eingerichtet werden soll, den Identifikator des sicheren Elemente, in dem der Master-Schlüssel gespeichert ist, und/oder einen Identifikator, mit dem das Slave-NFC-Gerät eindeutig identifiziert werden kann.

Der Backend-Service kann die Nachricht zur Installation eines Slave-Schlüssels von dem Master-NFC-Gerät empfangen 404. Nach Empfang der Nachricht kann der Backend-Service eine Aktivierungstransaktionsnummer, kurz Aktivierungs-TAN, an das sichere Element des Master-NFC-Geräts übermitteln 406. Die übermittelte Aktivierungs-TAN kann auf dem Master-NFC-Gerät über eine sichere Anzeige dem Kunden angezeigt werden. Ferner kann der Backend-Service mittels des übermittelten Identifikators des Slave-NFC-Geräts das Slave-NFC-Gerät identifizieren 408. Beispielsweise kann der Backend-Service eine Push-Nachricht an das Slave-NFC-Gerät übermitteln 410. Die Push-Nachricht kann beispielsweise die Fahrgestellnummer des Fahrzeugs umfassen. Mittels der Push-Nachricht kann das Slave-NFC-Gerät benachrichtigt werden, dass ein Slave-Schlüssel auf dem Slave-NFC-Gerät installiert werden soll. Die Push-Nachricht, kann beispielsweise in einer App des Slave-NFC-Geräts einem Nutzer des Slave-NFC-Geräts angezeigt werden. Der Nutzer kann ein Einrichten des Slave-Schlüssels auf dem Slave-NFC-Gerät bestätigen. Nach dem Bestätigen des Einrichtens des Slave-Schlüssels kann die App des Slave-NFC-Geräts den Identifikator des sicheren Elements des Slave-NFC-Geräts auslesen und an den Backend-Service übermitteln. Zusätzlich zu dem Identifikator des sicheren Elements des Slave-NFC-Geräts kann die Nachricht auch die Fahrgestellnummer des Fahrzeugs umfassen, für das der Slave-Schlüssel eingerichtet werden soll.

Der Backend-Service kann die Nachricht der App des Slave-NFC-Gerät empfangen 412, den Slave-Schlüssel für die Fahrgestellnummer aus einer Schlüsseldatenbank auslesen, und/oder einen Befehl zum Installieren einer Sicherheitsdomäne für das sichere Element des Slave-NFC-Geräts an einen Service, insbesondere an einen Trusted-Service-Manager, des Slave-NFC-Geräte Herstellers zu übermitteln 414. Der Trusted-Service-Manager kann eine Sicherheitsdomäne auf dem sicheren Element des Slave-NFC-Geräts installieren und einen kryptographischen Schlüssel der Sicherheitsdomäne an den Backend-Service übermitteln 416.

Mittels des kryptographischen Schlüssels kann der Backend-Service eine sichere Verbindung mit dem sicheren Element des Slave-NFC-Geräts aufbauen und eine Schlüsselanwendung an das sichere Element übertragen 418 und auf dem sicherem Element installieren. Die Schlüsselanwendung kann durch den Backend-Service vor der Übertragung an das sichere Element an den Slave-Schlüssel, die Fahrgestellnummer, die Aktivierungs-TAN und/oder das sichere Element angepasst werden. Wie in Fig. 2 bereits beschrieben, umfasst die Schlüsselanwendung die Instruktionen, die notwendig sind, damit sich ein Nutzer mittels des NFC-Geräts gegenüber dem Fahrzeug authentisieren kann und die entsprechenden Fahrberechtigungen erhält.

Nach der Installation der Schlüsselanwendung auf dem sicheren Element des Slave-NFC-Geräts kann der Nutzer des Slave-NFC-Geräts aufgefordert werden, die Aktivierungs-TAN einzugeben, die an das Master-NFC-Gerät übertragen wird. Das Übermitteln der Aktivierungs-TAN kann beispielweise telefonisch, mündlich, oder über ein anderes Verfahren zum Austausch der Aktivierungs-TAN erfolgen. Neben einem manuellen Austausch der Aktivierungs-TAN, kann die Aktivierungs-TAN auch über eine Datenschnittstelle zwischen dem Master-NFC-Gerät und dem Slave-NFC-Gerät automatisiert erfolgen. Ist der Austausch der Aktivierungs-TAN erfolgt und durch den Backend-Service verifiziert 420, kann der Backend-Service den Slave-Schlüssel an das sichere Element des Slave-NFC-Geräts übertragen. Der Nutzer des Slave-NFC-Geräts und der Kunde des Master-NFC-Geräts können über das erfolgreiche Übertragen des Slave-Schlüssels benachrichtigt werden 422, indem das Backend, eine entsprechende Nachricht an die jeweiligen Geräte überträgt.

Nach dem erfolgreichen Übertragen des Slave-Schlüssels auf das sichere Element des Slave-NFC-Geräts kann der Nutzer das Slave-NFC-Gerät nutzen, um sich gegenüber dem Fahrzeug zu authentifizieren. Das Fahrzeug wiederum kann dem Nutzer die entsprechenden Fahrberechtigungen für das Fahrzeug gewähren. Falls der Nutzer sich erstmalig mit dem Slave-Schlüssel gegenüber dem Fahrzeug authentisiert, kann es notwendig sein, dass das Fahrzeug den Slave-Schlüssel aktivieren muss, bevor eine Nutzung des Fahrzeugs möglich ist. Das Aktivieren des Slave-Schlüssels kann analog zum oben in Fig. 3 beschriebenen Aktivierungsverfahrens erfolgen, mit dem Unterschied, dass zum Aktivieren eines Slave-Schlüssels kein ID-Geber, z.B. ein Fahrzeugschlüssel, notwendig sein kann.

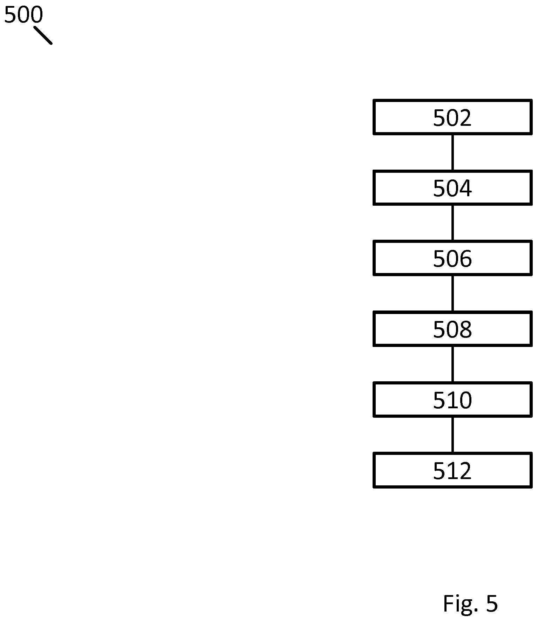

**Fig. 5** zeigt ein beispielhaftes Verfahren 500 zum Verwenden von Fahrzeugfunktionen mithilfe eines auf einem NFC-Gerät gespeicherten Master-Schlüssels oder Slave-Schlüssels. Eine Fahrzeugfunktion, kann beispielsweise das Öffnen oder Schließen eines Fahrzeugtür oder einer Fahrzeugklappe, das Starten eines Motors des Fahrzeugs, und/oder einen Zugang zu digitalen (Online-)Diensten und/oder Fahrerassistenzsystemen des Fahrzeugs umfassen. Der Kunde oder Nutzer kann das NFC-Gerät in einen Lesebereich eines NFC-Lesegeräts bringen. Ein Fahrzeug kann eines oder mehrere NFC-Lesegeräte umfassen. Vorzugsweise kann jedes der NFC-Lesegeräte des Fahrzeugs nach einem NFC-Gerät in dem jeweiligen Lese- bzw. Sende-/Empfangsbereich suchen und ein NFC-Gerät erkennen 502. Ein NFC-Lesegerät kann beispielsweise an einer Außenseite des Fahrzeugs angebracht oder in eine Außenseite des Fahrzeugs integriert sein. Das an der Außenseite des Fahrzeugs befindliche NFC-Lesegerät kann zum Erkennen von NFC-Geräten im Außenbereich des Fahrzeugs eingesetzt werden, um beispielsweise ein Öffnen oder Schließen einer Fahrzeugtür und/oder eines anderen Fahrzeugzugangs zu ermöglichen. Ein weiteres NFC-Lesegerät kann beispielsweise im Innenbereich des Fahrzeugs integriert sein. Das im Innenbereich des Fahrzeugs integrierte NFC-Lesegerät kann beispielweise dazu verwendet werden, ein Starten des Motors des Fahrzeugs zu ermöglichen.

Nachdem ein NFC-Lesegerät des Fahrzeugs ein NFC-Gerät erkannt hat, kann das NFC-Lesegerät des Fahrzeugs eine Nachricht zum Auswählen einer Schlüsselanwendung an das sichere Element des NFC-Geräts übermitteln 504. Abhängig von der ausgewählten Schlüsselanwendung kann eine bestimmte Fahrzeugfunktion des Fahrzeugs freigegeben oder gesperrt werden. Die Auswahl der Schlüsselanwendung kann aus dem NFC-Gerät erfolgen oder durch das NFC-Lesegerät vorgegeben sein. Falls die Schlüsselanwendung auf dem sicheren Element des NFC-Geräts vorhanden bzw. gespeichert ist, kann das NFC-Gerät die Nachricht des NFC-Lesegeräts des Fahrzeugs bestätigen. Das NFC-Lesegerät des Fahrzeugs kann eine Nachricht an das Steuergerät zum Sperren bzw. Entsperren des Fahrzeugs, auch Body-Domain-Controller, kurz BDC, genannt, senden 506, mit dieser der BDC aufgeweckt werden kann. Ferner kann das NFC-Lesegerät eine Challenge-Response-Authentifizierung mit dem sicheren Element des NFC-Geräts durchführen 508. Dazu kann das NFC-Lesegerät eine Challenge-Nachricht das NFC-Gerät übermitteln und eine Response-Nachricht vom NFC-Gerät empfangen. Die Response-Nachricht kann durch die Schlüsselanwendung des NFC-Geräts unter Verwendung des Schlüssels, z.B. des Master-Schlüssels oder des Slave-Schlüssel, erzeugt werden. Sowohl die Challenge als auch die Response kann das NFC-Lesegerät zum Verifizieren an den BDC übermitteln. Der BDC kann die Response des NFC-Geräts zu der gesendeten Challenge verifizieren 510. Falls die Response als korrekt von dem BDC verifiziert wurde, kann der BDC die Fahrzeugfunktion freigeben 512, z.B. die Tür des Fahrzeugs entsperren oder den Motor des Fahrzeugs starten.

Falls der Schlüssel, z.B. der Master-Schlüssel oder der Slave-Schlüssel, auf dem BDC nicht bekannt ist, kann der BDC einen Befehl an das sichere Element des NFC-Gerät übermitteln und ein Aktivierungsdatenpaket anfordern. Mittels des Aktivierungsdatenpakets kann der BDC die Response des NFC-Geräts verifizieren. Wurde die Response erfolgreich durch den BDC verifiziert, kann, wie oben beschrieben, der BDC die entsprechende Fahrzeugfunktion freigeben.

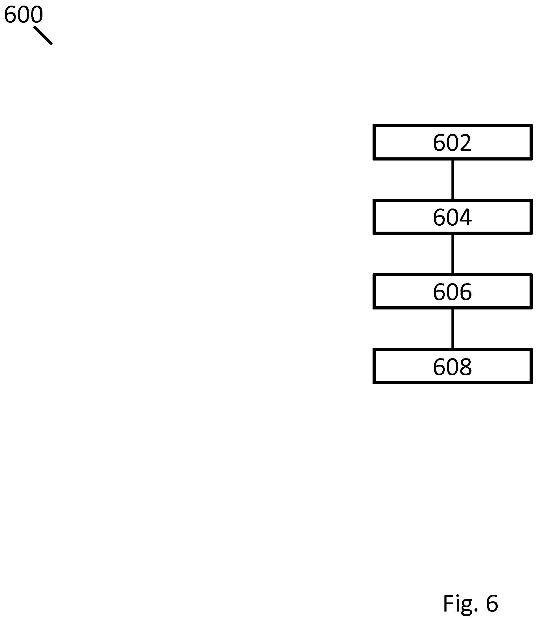

**Fig. 6** zeigt ein beispielhaftes Verfahren 600 zum Zurücknehmen bzw. Löschen eines Schlüssels, z.B. eines Master-Schlüssels oder eines Slave-Schlüssels, auf einem NFC-Gerät. Der Schlüssel kann auf von einem Service, z.B. durch den Trusted-Service-Manager, auf dem sicheren Element eines NFC-Geräts gelöscht werden. Der Trusted-Service-Manager kann von dem Backend-Service einen Befehl zum Löschen des Schlüssels empfangen 702. Der Befehl zum Löschen des Schlüssels kann einen Fahrgestellnummer des Fahrzeugs, für das der Schlüssel gültig ist, und/oder einen eindeutigen Identifikator des NFC-Geräts umfassen. Mithilfe der Fahrgestellnummer und/oder des eindeutigen Identifikators des NFC-Geräts kann der Trusted-Service-Manager einen Identifikator des sicheren Elements ermitteln 704. Beispielsweise kann der Trusted-Service-Manager eine Datenbankabfrage ausführen, um den Identifikator des sicheren Elements des NFC-Geräts zu bestimmen. Der Befehl zum Löschen des Schlüssels kann an das sichere Element des NFC-Geräts vom Trusted-Service-Manager übermittelt werden 606. Das sichere Element des NFC-Geräts kann den Befehl empfangen und die Schlüsselanwendung kann den Schlüssel vom sicheren Element des NFC-Geräts löschen. Das Löschen des Schlüssels kann von der Schlüsselanwendung des sicheren Elements bestätigt werden 608, indem eine Bestätigungsnachricht an den Trusted-Service-Manager übermittelt wird.

Das Verfahren zum Löschen des Schlüssels auf dem sicheren Element eines NFC-Geräts kann durch eine App des NFC-Geräts, durch die Head-Unit des Fahrzeugs, und/oder durch den Backend-Service bzw. einen Administrator des Backend-Service gestartet werden. Somit kann flexibel der Schlüssel und damit die Fahrberechtigungen des Fahrzeugs entzogen werden.

### Bezugszeichenliste

100 System
102 Fahrzeug
104 NFC-Gerät bzw. NFC-Device
106 Backend bzw. Backend-Dienste oder Backend-Services
108 Geräte/Device-Hersteller bzw. Dienste oder Services des Geräte/Device-Herstellers
110 Kunde
200 Verfahren zum Einrichten eines Master-Schlüssels
202 Anmelden an einem Backend-Service
204 Starten eines Hinzufügens eines Master-Schlüssels zu einem NFC-Gerät
206 Ausführen des Hinzufügens des Master-Schlüssels zu dem NFC-Geräts in dem Backend-Service
208 Ermitteln des Master-Schlüssels zum Freigeben des Fahrzeugs in einer Schlüsseldatenbank
210 Installieren einer Sicherheitsdomäne auf dem sicheren Element des NFC-Geräts
212 Übertragen und Speichern des Masterschlüssels auf das sichere Element des NFC-Geräts
300 Aktivieren eines Master-Schlüssels in einem Fahrzeug
302 Starten des Aktivierungsprozesses zum Aktivieren des Master-Schlüssels
304 Erkennen des NFC-Geräts
306 Auslesen von Daten zum Aktivieren des Master-Schlüssels aus dem sicheren Element des NFC-Geräts
308 Authentifizieren des ID-Gebers durch den BDC
310 Aktivieren des Master-Schlüssels
400 Verfahren zum Einrichten eines Slave-Schlüssels auf einem NFC-Gerät
402 Authentisieren des Kunden gegenüber dem Backend
404 Empfangen einer Nachricht zur Installation eines Slave-Schlüssels
406 Übermitteln der Aktivierungs-TAN an das sicheren Element des Master-NFC-Geräts
408 Identifizieren des Slave-NFC-Geräts
410 Übermitteln einer Nachricht an das Slave-NFC-Gerät
412 Empfangen des Identifikators des sicheren Elements des Slave-NFC-Geräts
414 Übermitteln eines Befehls zum Installieren einer Sicherheitsdomäne
416 Übermitteln der Sicherheitsdomäne und des dazugehörigen kryptographischen Schlüssels
418 Übertragen der Schlüsselanwendung
420 Verifizieren der Aktivierungs-TAN
422 Benachrichtigen über das erfolgreiche Übertragen des Slave-Schlüssels
500 Verfahren zum Verwenden von Fahrzeugfunktionen
502 Erkennen eines NFC-Geräts
504 Übermitteln einer Nachricht an das NFC-Gerät
506 Senden einer Nachricht an den BDC
508 Durchführen einer Challenge-Response Authentifizierung
510 Verifizieren der Response-Nachricht
512 Freigeben der Fahrzeugfunktion
600 Verfahren zum Löschen eines Schlüssels
602 Empfangen eines Befehls zum Löschen des Schlüssels
604 Ermitteln eines Identifikators des sicheren Elements eines NFC-Geräts
606 Übermitteln des Befehls zum Löschen des Schlüssels an das sichere Element des NFC-Geräts
608 Bestätigen eines erfolgreichen Löschens des Schlüssels

## Patentansprüche

1. Verfahren zum Einrichten eines mobilen Endgeräts (104) zum Steuern von Fahrzeugfunktionen eines Fahrzeugs (102), wobei das mobile Endgerät (104) und das Fahrzeug (102) jeweils ein Nahfunksystem aufweisen,
wobei das mobile Endgerät (104) dazu eingerichtet ist, seine Identität kryptographisch sicher nachzuweisen, und
wobei das mobile Endgerät (104) ein Near-Field-Communication-Gerät, NFC-Gerät (104), ist, das Verfahren umfassend:
Auslesen eines Identifikators eines sicheren Elements des NFC-Geräts (104) durch eine App des NFC-Geräts (104);
Übermitteln des Identifikators des sicheren Elements des NFC-Geräts (104) von der App an einen Backend-Service (106), um ein Hinzufügen eines Fahrzeugschlüssels zu dem NFC-Gerät (104) in dem Backend-Service (106) auszuführen;
Empfangen einer Nachricht, den Fahrzeugschlüssel zur Nutzung von Fahrzeugfunktionen des Fahrzeugs (102) dem NFC-Gerät (104) hinzuzufügen, durch den Backend-Service (106);
Ermitteln des Fahrzeugschlüssels zur Nutzung der Fahrzeugfunktionen aus einer Schlüsseldatenbank durch den Backend-Service (106);
Übermitteln einer Nachricht zur Installation einer Sicherheitsdomäne auf dem sicheren Element des NFC-Geräts (104) an einen Service (108) eines Herstellers des NFC-Geräts (104);
Installieren (210) der Sicherheitsdomäne auf dem sicheren Element des NFC-Geräts (104) durch den Service (108) des Herstellers des NFC-Geräts (104);
Übertragen eines Schlüssels für die Sicherheitsdomäne von dem Service (108) an den Backend-Service (106);
Aufbauen eines sicheren Kommunikationskanals zu dem sicheren Element des NFC-Geräts (104) durch den Backend-Service (106) unter Verwendung des Schlüssels der Sicherheitsdomäne;
Übertragen einer Schlüsselanwendung und des Fahrzeugschlüssels über den sicheren Kommunikationskanal an das sichere Element des NFC-Geräts (104) von dem Backend-Service (106);
Speichern der Schlüsselanwendung und des Fahrzeugschlüssels in dem sicheren Element des NFC-Geräts (104);
Senden der kryptographisch gesicherten Identität an das Fahrzeug (102) durch das NFC-Gerät (104);
Senden des Fahrzeugschlüssels durch das NFC-Gerät (104) an das Fahrzeug (102) unter Nutzung einer direkten Kommunikation innerhalb des NFC-Geräts (104),
wobei das sichere Element und das Nahfunksystem des NFC-Geräts (104) zur direkten Kommunikation derart verbunden sind, dass Software, die ohne physische Verbindung zum NFC-Gerät (104) veränderlich ist, die Kommunikation nicht beeinflussen kann;
Verifizieren des Fahrzeugschlüssels durch das Fahrzeug (102); und
Falls der Fahrzeugschlüssel erfolgreich durch das Fahrzeug (102) verifiziert wird: Ausführen einer Fahrzeugfunktion eines Aktivierens einer Fahrzeugschließanlage.

2. Verfahren nach Anspruch 1, wobei der Fahrzeugschlüssel kryptographisch bearbeitete Daten repräsentiert.

3. Verfahren nach einem der vorhergehenden Ansprüche, ferner umfassend:
Empfangen einer Anforderung zum Löschen des Fahrzeugschlüssels des mobilen Endgeräts (104) am Server (106); und/oder
Senden eines Befehls zum Löschen des Fahrzeugschlüssels an das Fahrzeug (102); und/oder
Senden eines Befehls zum Löschen des Fahrzeugschlüssels an das mobile Endgerät (104).

4. Server (106), der eingerichtet ist das Verfahren nach einem der Ansprüche 1 bis 4 auszuführen.

## Claims

1. A method for configuring a mobile terminal (104) to control vehicle functions of a vehicle (102), wherein the mobile terminal (104) and the vehicle (102) each have a short-range radio system,
wherein the mobile terminal (104) is configured to provide secure cryptographic proof of its identity, and
wherein the mobile terminal (104) is a near-field communication device (NFC device) (104), the method comprising:
reading out an identifier of a secure element of the NFC device (104) by an app of the NFC device (104);
transmitting the identifier of the secure element of the NFC device (104) from the app to a backend service (106) in order to perform an addition of a vehicle key to the NFC device (104) in the backend service (106);
receiving, by the backend service (106), a message to add the vehicle key, for use of vehicle functions of the vehicle (102), to the NFC device (104);
determining, by the backend service (106), the vehicle key, for use of the vehicle functions, from a key database;
transmitting a message for installation of a security domain on the secure element of the NFC device (104) to a service (108) of a manufacturer of the NFC device (104);
installing (210) the security domain on the secure element of the NFC device (104) by the service (108) of the manufacturer of the NFC device (104);
transmitting a key for the security domain from the service (108) to the backend service (106);
establishing a secure communication channel to the secure element of the NFC device (104) by the backend service (106) with use of the key of the security domain;
transmitting a key use and the vehicle key via the secure communication channel to the secure element of the NFC device (104) from the backend service (106);
storing the key use and the vehicle key in the secure element of the NFC device (104);
sending the cryptographically secured identity to the vehicle (102) by the NFC device (104);
sending the vehicle key by the NFC device (104) to the vehicle (102) with use of a direct communication within the NFC device (104),
wherein the secure element and the short-range radio system of the NFC device (104) for direct communication are connected in such a way that software which is variable without physical connection to the NFC device (104) cannot influence the communication;
verifying the vehicle key by the vehicle (102); and
if the vehicle key is verified successfully by the vehicle (102): executing a vehicle function of activation of a vehicle locking system.

2. A method according to claim 1, wherein the vehicle key represents cryptographically processed data.

3. A method according to one of the preceding claims, further comprising:
receiving a request to delete the vehicle key of the mobile terminal (104) at the server (106); and/or
sending a command to delete the vehicle key to the vehicle (102); and/or
sending a command to delete the vehicle key to the mobile terminal (104).

4. A server (106) which is configured to carry out the method according to any one of claims 1 to 3.

## Revendications

1. Procédé permettant d'agencer un terminal mobile (104) pour permettre la commande de fonctions d'un véhicule (102), le terminal mobile (104) et le véhicule (102) comportant chacun un système radio à courte distance,
le terminal mobile (104) étant agencé pour permettre de prouver de façon sécurisée son identité par des moyens cryptographiques, et
le terminal mobile (104) étant un appareil de communication en champ proche - appareil NFC (104), ce procédé comprenant des étapes consistant à :
- extraire un identificateur d'un élément sécurisé de l'appareil NFC (104) par une application de l'appareil NFC (104),
- transmettre l'identificateur de l'élément sécurisé de l'appareil NFC (104) de l'application à un service Backend (106) pour effectuer l'addition d'une clef de véhicule à l'appareil NFC (104) dans le service Backend (106),
- recevoir un message consistant à ajouter à l'appareil NFC (104) la clef du véhicule pour l'utilisation de fonctions du véhicule (102) par le service Backend (106),
- déterminer la clef du véhicule pour l'utilisation des fonctions du véhicule à partir d'une banque de données de clef par le service Backend (106),
- transmettre un message pour l'installation d'un domaine de sécurité sur l'élément sécurisé de l'appareil NFC (104) à un service (108) du fabricant de l'appareil NFC (104),
- installer (210) le domaine de sécurité sur l'élément sécurisé de l'appareil NFC (104) par le service (108) du fabricant de cet appareil NFC (104),
- transmettre une clef pour le domaine de sécurité du service (108) au service Backend (106),
- construire un canal de communication sécurisé vers l'élément sécurisé de l'appareil NFC (104) par le service Backend (106) en utilisant la clef du domaine de sécurité,
- transmettre une utilisation de clef et la clef du véhicule par l'intermédiaire du canal de communication sécurisé à l'élément sécurisé de l'appareil NFC (104) par le service Backend (106),
- enregistrer l'utilisation de clef et la clef du véhicule dans l'élément sécurisé de l'appareil NFC (104),
- transmettre l'identité sécurisée cryptographique au véhicule (102) par l'appareil NFC (104),
- transmettre au véhicule (102) la clef du véhicule par l'appareil NFC (104) en utilisant une communication directe à la partie interne de l'appareil NFC (104),
- l'élément sécurisé et le système radio à courte distance de l'appareil NFC (104) étant reliés pour permettre une communication directe de sorte qu'un logiciel modifiable sans liaison physique avec l'appareil NFC (104), ne puisse pas influencer la communication,
- vérifier la clef du véhicule par le véhicule (102), et
- si la clef du véhicule a été vérifiée avec succès par le véhicule (102) effectuer une fonction d'activation d'un système de verrouillage du véhicule.

2. Procédé conforme à la revendication 1,
selon lequel la clef du véhicule représente des données ayant subi un traitement cryptographique.

3. Procédé conforme à l'une des revendications précédentes, comprenant en outre des étapes consistant à :
recevoir une demande pour effacer la clef du véhicule du terminal mobile (104) sur le serveur (106), et/ou
transmettre un ordre pour effacer la clef du véhicule au véhicule (102), et/ou
transmettre un ordre pour effacer la clef du véhicule au terminal mobile (104).

4. Serveur (106) réalisé pour permettre la mise en œuvre du procédé conforme à l'une des revendications 1 à 3.
